Europäisches Patentamt

European Patent Office

Office européen des brevets

(19)

(11) Numéro de publication : **0 491 620 B1**

(12) **FASCICULE DE BREVET EUROPEEN**

(45) Date de publication du fascicule du brevet :
**18.05.94 Bulletin 94/20**

(51) Int. Cl.[5] : **C02F 11/08**

(21) Numéro de dépôt : **91403428.5**

(22) Date de dépôt : **17.12.91**

(54) **Procédé de destruction d'effluents organiques toxiques par incinération en phase aqueuse et installation en faisant application.**

(30) Priorité : **19.12.90 FR 9015931**

(43) Date de publication de la demande :
**24.06.92 Bulletin 92/26**

(45) Mention de la délivrance du brevet :
**18.05.94 Bulletin 94/20**

(84) Etats contractants désignés :
**CH DE GB IT LI SE**

(56) Documents cités :
**FR-A- 2 343 703**
**GB-A- 1 387 510**
**US-A- 3 963 611**
**US-A- 4 229 296**

(73) Titulaire : **COMMISSARIAT A L'ENERGIE ATOMIQUE**
**31-33, rue de la Fédération**
**F-75015 Paris (FR)**

(72) Inventeur : **Dulieu, Pierre**
**3 Chemin Brunet**
**F-13100 Aix en Provence (FR)**
Inventeur : **Euzen, J. Paul**
**45 Chemin de Bachely**
**F-69570 Dardilly (FR)**
Inventeur : **Leybros, Jean**
**35 Parc Chamont**
**F-30200 Bagnols sur Ceze (FR)**
Inventeur : **Bocard, Christian**
**11 rue Maurice Berteaux**
**F-78112 Fourqueux (FR)**
Inventeur : **Faugeras, Pierre**
**10 rue Pierrelatte**
**F-30130 Pont Saint Esprit (FR)**

(74) Mandataire : **Mongrédien, André et al**
**c/o BREVATOME 25, rue de Ponthieu**
**F-75008 Paris (FR)**

## Description

La présente invention se rapporte d'une façon générale au problème du traitement et de la destruction des effluents organiques toxiques ou dangereux.

La destruction des effluents organiques dangereux et le rejet des résidus produits, dans des conditions acceptables pour l'environnement et assortis d'un coût de traitement raisonnable, est une préoccupation dont l'importance ne cesse d'augmenter dans l'industrie.

Un grand nombre de produits organiques de base, leurs dérivés et leurs sous-produits réactionnels peuvent être considérés comme non-biodégradables. Malgré les problèmes de gestion à long terme des décharges contrôlées, une grande quantité de ces produits et déchets est stockée, bien que la destruction de ces composés soit réalisable par oxydation conduisant à la formation de dioxyde de carbone, d'eau et de composés minéraux de l'azote, du soufre, du phosphore et des halogènes, dont le conditionnement final pose beaucoup moins de problèmes.

Selon la nature du polluant et sa teneur dans l'effluent, quatre grandes méthodes sont possibles :
- L'oxydation par voie chimique (ozonation par exemple), applicable aux faibles teneurs et pour des composés peu réfractaires ;
- L'oxydation par voie biologique, pour des teneurs moyennes sous réserve de la biodégradabilité des composés ;
- L'oxydation en phase aqueuse, dans le domaine des effluents trop dilués pour l'incinération ou réfractaires à tous traitements chimiques ou biologiques ;
- L'incinération à haute température, pour les très fortes concentrations (>30%).

L'oxydation en phase aqueuse, par l'oxygène de l'air, à température et pression élevées (250°C à 320°C - 50 à 200 bars), est un procédé d'application relativement récente qui conduit à des rendements atteignant 98% pour des temps de séjour de l'ordre de l'heure.

De nombreux travaux ont été menés sur le sujet, initialement pour le traitement des effluents urbains, puis ont été étendus notamment au traitement des liqueurs noires de papeterie et à celui des effluents des industries chimiques et pétrochimiques.

Des études sur la catalyse homogène ou hétérogène de la réaction et sur l'oxydation utilisant des agents autre que l'oxygène de l'air (ozone, peroxyde) ont également été entreprises.

La présente invention concerne plus particulièrement l'incinération des déchets organiques liquides et/ou solides dissous ou en suspension dans l'eau pressurisée sous pression d'air, d'air enrichi en oxygène ou d'oxygène pur. Ce procédé, en soi connu, conduit à certains avantages, parmi lesquels :
- la dégradation, voire la destruction complète de tous produits organiques subissant la réaction d'incinération pendant des durées comprises entre 10 minutes et une heure dans des conditions de pression et température pouvant approcher les coordonnées critiques de l'eau (374°C et 221 bars) ;
- la rétention des impuretés minérales anioniques (C1, S, F, P,...) sous forme ionisée dans l'eau neutralisable pendant la réaction et/ou juste avant rejet ;
- la rétention des impuretés minérales cationiques (Hg, Pb, Cd,...) sous forme d'oxydes plus ou moins hydratés en suspension dans l'eau, récupérables par coagulation, filtration ou centrifugation et recyclables en hydrométallurgie ;
- la libération de gaz résiduels non toxiques sous forme d'un mélange eau, azote, oxygène et $CO_2$.

Malheureusement les appareils utilisés jusqu'à maintenant pour réaliser l'incinération sont des réacteurs de type autoclave discontinu (fonctionnement par charges) ou de type réacteur mélangé qui n'assurent au mieux qu'un seul étage de traitement et conduisent à des effluents insuffisament détoxifiés. Des réacteurs plus élaborés ont été envisagés, qui consistent à compartimenter le réacteur autoclave avec une agitation individualisée par compartiments. Cette méthode est équivalente à l'association de plusieurs réacteurs en série.

En fait, les équipements actuels ne sont pas optimisés et les conditions très sévères de fonctionnement conduisent à des réacteurs, avec leur environnement, particulièrement onéreux.

La présente invention a pour objet un procédé de destruction d'effluents organiques toxiques qui permet, en utilisant une colonne pulsée à plateaux de travailler en continu, ce qui représente un progrès très important dans le domaine technique envisagé.

Le procédé de destruction d'effluents organiques toxiques par incinération en phase aqueuse sous pression d'une phase gazeuse contenant de l'oxygène, se caractérise en ce que la solution aqueuse contenant les effluents et un agent de neutralisation, ainsi que la phase gazeuse contenant de l'oxygène sont introduites, en continu, dans une colonne pulsée à plateaux, portée à une température comprise entre 250°C et 374°C, à une pression de 150 à 250 bars, les sous produits de l'incinération étant soutirés en permanence au sommet de la colonne.

Selon une caractéristique intéressante de la présente invention, la phase gazeuse oxydante contenant de l'oxygène peut être de l'air, de l'air enrichi en oxygène ou même de l'oxygène pur.

Une température de fonctionnement de l'ordre de 300°C pour la colonne pulsée ainsi qu'une pression de 200 bars représentent les valeurs moyennes les plus intéressantes de façon courante dans ce type d'application.

On voit donc que selon l'invention, l'utilisation d'une colonne pulsée à plateaux à haute température et sous pression élevée, permet de traiter en continu des effluents organiques toxiques, ceux-ci et la phase gazeuse oxydante étant introduits en permanence dans la colonne dont on soutire au sommet les produits de l'incinération. Le fonctionnement en continu ainsi que les rendements élevés atteints qui sont possibles dans les conditions de fonctionnement rendent ce procédé particulièrement avantageux et performant par rapport aux procédés de l'art antérieur qui fonctionnaient de façon discontinue.

La présente invention a également pour objet une installation pour l'incinération en continu d'effluents organiques mettant en oeuvre le procédé précédent.

Une telle installation pour l'incinération en continu d'effluents organiques toxiques, se caractérise en ce qu'elle comprend en combinaison :

- une colonne pulsée à plateaux (1) pour la réaction d'oxydation des effluents ;
- des moyens d'alimentation (14, 20, 21, 22) de cette colonne 1 en phase aqueuse organique contenant les effluents toxiques et un agent de neutralisation ;
- des moyens d'alimentation (6, 23, 24) à la base de la colonne (1) en phase gazeuse contenant de l'oxygène ;
- au sommet de la colonne (1), un vase d'expansion (10) relié à celle-ci par une canalisation de soutirage (9) pour l'extraction en continu, à chaud et sous pression, des produits de la réaction ;
- des moyens de régulation thermique (15, 31, 32, 33, 44) du mélange réactionnel contenu dans la colonne (1) et (13) pour les produits gazeux de la réaction ;
- des moyens (25, 26, 27) de régulation de la pression règnant dans le vase d'expansion (10) et dans la colonne (1).

Selon l'invention, une installation de ce type peut être réalisée selon les deux techniques connues de fonctionnement des colonnes pulsées, c'est-à-dire l'écoulement des mélanges réactionnels à contre-courant ou à co-courant.

Dans un premier mode de mise en oeuvre de l'invention, l'installation pour l'incinération en continu d'effluents organiques toxiques, se caractérise en ce que, la colonne (1) fonctionnant à contre courant, le mélange réactionnel circule de haut en bas dans la colonne (1), la solution aqueuse organique contenant les effluents à détruire étant introduite, dans la partie supérieure de la colonne (1), par un dispositif d'introduction (14) à niveau réglable en hauteur.

Dans un second mode de mise en oeuvre de l'invention, l'installation pour l'incinération en continu d'effluents organiques toxiques, se caractérisé en ce que, la colonne (1) fonctionnant à co-courant, le mélange réactionnel circule de bas en haut dans la colonne (1), la phase aqueuse organique contenant les effluents à détruire et la phase gazeuse contenant de l'oxygène étant toutes deux introduites à la base de la colonne (1).

Bien entendu, la colonne pulsée utilisant le procédé objet de l'invention est équipée d'un certain nombre d'accessoires qui en perfectionnent encore le fonctionnement.

Selon une caractéristique intéressante de l'invention, le vase d'expansion 10 de la colonne 1 est équipé d'un condenseur déshumidificateur 13 servant à la récupération du milieu réactionnel vaporisé au cours de la réaction et au maintien du niveau dans la colonne (1).

Selon une autre caractéristique également intéressante de la présente invention, le dispositif d'alimentation du substrat aqueux permet son admission dans le corps (3) de réacteur à une hauteur choisie selon la qualité du substrat aqueux afin de garantir un temps de séjour minimum de toute molécule organique présente.

L'installation selon l'invention peut également comporter des moyens d'homogénéisation (43) de mise en circulation et de recyclage de la première phase (2) dans la colonne (1).

Enfin, des moyens de régulation du pH (41) dans la colonne (1) sont prévus pour surveiller le potentiel et le degré d'acidité de la phase liquide qui s'écoule dans cette colonne.

L'utilisation d'une colonne pulsée comme réacteur chimique dans un processus d'incinération de déchets organiques permet d'obtenir à l'aide d'un équipement classique simple et facile à réaliser :

- le traitement de tout produit organique quel qu'il soit et sous n'importe quelle forme ;
- un fonctionnement continu ;
- une bonne maîtrise de la réaction par l'obtention d'un gradient de concentration contrôlé et stable ;
- une bonne distribution de l'oxydant tout au long de l'appareil ;
- la possibilité de fonctionner avec n'importe quel couple pression/température prédéterminé grâce à un fonctionnement en régime bouillant avec évacuation de la vapeur engendrée au moyen d'un système régulé sur la pression de réaction.

La présente invention permet de résoudre simplement certains problèmes spécifiques de l'incinération des déchets par voie humide et qui sont :

- La réduction au maximum des durées de l'incinération qui conditionnent le volume pressurisé et les coûts d'investissements. Parmi les paramètres d'action disponibles il y a :
  - la température limitée à la température critique de l'eau (374°C) ;
  - la pression qui au-delà de 200 bars conduit à des épaisseurs de peau de réacteur prohibitives ;
  - la quantité d'oxygène nécessaire qui impose soit des volumes d'air importants soit un enrichissement de l'air injecté, soit encore l'utilisation d'oxygène pur et qui se traduit dans tous les cas par des coûts d'investissement et d'exploitation élevés ;
  - la catalyse qui est trop spécifique et ajoute des frais d'exploitation ;
  - la qualité du transfert de l'oxygène vers la phase liquide au moyen d'équipement interne spécifique pour le réacteur.
- La garantie d'un temps de passage minimum pour toute molécule organique introduite entre l'entrée et la sortie du système pour assurer sa destruction et obtenir des effluents liquides et gazeux détoxifiés au moins en deçà des limites imposées par les législations.

Cette garantie est obtenue par la réalisation de plusieurs étages de traitement individualisé ou non, et qui sont la conséquence dans le cadre de l'invention du gradient de concentration réalisé entre l'entrée et les sorties de l'appareil afin que le temps de parcours minimum soit respecté pour chaque molécule introduite.

- L'évacuation de l'énergie thermique produite et notamment dans le cas des effluents très concentrés et surtout dans les cas où le potentiel énergétique est variable.

La principale qualité d'une installation conforme à l'invention est sa polyvalence :

En amont elle autorise le traitement de déchets organiques de toute nature (choix du matériau de construction et contrôle du pH), toute concentration (volant thermique de l'eau grâce au système bouillant) et tout état (utilisation d'un équipement de conditionnement amont de type broyeur humide) ;

- En aval, elle permet d'ajuster le procédé pour l'obtention d'effluents acceptables par les législations grâce à la maîtrise de tous les paramètres opérationnels.
- Enfin selon les cas particuliers rencontrés elle est apte à fonctionner à contre-courant ou à co-courant indiféremment.

L'oxydation en phase aqueuse par l'oxygène est une réaction radicalaire, plus ou moins exothermique, qui apparaît à des températures élevées et par suite à des pressions élevées puisque le substrat est l'eau à l'état liquide (250°C à 320°C et 50 à 200 bars).

D'une façon générale, la fixation de l'oxygéne radicalaire conduit à la formation de peroxydes qui se décomposent en alcools, aldéhydes et cétones, ceux-ci se décomposant ensuite en acides carboxyliques (acides formique et acétique).

Dans le cas de composés à caractères aromatiques, on observe la formation de nombreux diacides saturés et insaturés qui se décomposent finalement en acides formique et acétique beaucoup plus réfractaires à l'oxydation et dont la décarboxylation impose des températures plus élevées (>320°C).

Si l'on obtient la réaction complète, elle conduit à la formation d'eau, de dioxyde de carbone, d'azote moléculaire, d'acides minéraux, et s'écrit sous la forme générale :

$$CaHbOcNdFeClf + xO_2 + yH_2O \rightarrow aCO_2 + 0,5bH_2O + 0,5cN_2 + eHF + fHCl + \delta H$$

avec x=a+0,25b-0,5c-0,5y et y=0,5e+0,5f-0,5b

Sur le problème du temps de contact global, la majorité des investigateurs s'accorde pour retenir un temps de séjour en réacteur compris entre 10 minutes et 1,0 heure pour la majorité des composés étudiés. Les composés les plus réfractaires conduisent à des temps de réaction de l'ordre de 2,0 heures et plus.

L'utilisation de catalyseur permet d'accélérer notablement la cinétique mais ne modifie pratiquement pas les conditions de température et pression nécessaires.

Des études systématiques de l'oxydation en phase aqueuses de différents composés organiques ont été menées, en laboratoire.

Les traitements avec des températures comprises entre 200°C et 250°C sous 136 bars conduisent à de l'acide acétique et des cétones comme produits terminaux.

Un fonctionnement à 320°C sous 200 bars permet l'obtention de rendements proches de 100% et d'un taux de destruction de l'acide acétique (composé intermédiaire) supérieur à 50%. Des essais menés à 275°C sont moins satisfaisant mais peuvent parfois être améliorés par la présence d'un catalyseur ($Cu^{++}$ en solution).

La majorité des composés testés se décompose facilement (rendement > 95%), les plus réfractaires (rendement > 70%) appartiennent à la famille des aromatiques halogénés (dichlorobenzène, PCB, etc).

Un classement, non exhaustif, simple, peut être envisagé :

- composés organiques et minéraux présentant le groupement nitrile CN (acétonitrile, acrylonitrile, cyanure, thiocyanate, etc) : faciles à détruire ;

4

- hydrocarbures aliphatiques substitués ou non : faciles à détruire ;
- hydrocarbures aromatiques et polyaromatiques non substitués (benzène, toluène, pyrène, etc) : faciles à détruire ;
- hydrocarbures aromatiques substitués mais non halogénés (phénol, crésol, aniline, etc) : faciles à détruire ;
- hydrocarbures aromatiques mono ou polyhalogénéss (chlorobenzène, chlorophénol, PCB etc) : réfractaires et peuvent justifier l'emploi de catalyseurs.

Le principe de la technique d'incinération en phase aqueuse consiste à mettre en contact intime la phase aqueuse avec l'oxygène de l'air. La température de la réaction doit être élevée (>250°C) pour obtenir un taux de conversion satisfaisant. La réaction ayant lieu en phase aqueuse, la pression de fonctionnement est élevée afin de maintenir l'eau à l'état liquide pour limiter les pertes de chaleur sensible (chaleur latente de vaporisation de l'eau entraînée dans les gaz) du milieu réactionnel qui doit être maintenu en température.

Les eaux résiduaires brutes contenant l'effluent à traiter sont collectées dans un réservoir où elles peuvent subir au préalable un traitement de neutralisation.

Elles alimentent le réacteur par l'intermédiaire d'une pompe à haute pression via un échangeur de chaleur qui assure le préchauffage. Le fluide chauffant est constitué par les eaux traitées sortant du réacteur et qui circule à contre-courant des eaux non traitées.

L'agent oxydant est généralement l'oxygène de l'air ; cet air est comprimé par un compresseur haute pression et introduit dans le réacteur.

Le mélange diphasique circule à contre ou à co-courant dans le réacteur qui peut être muni d'équipements internes promoteurs de turbulences pour assurer un contact intime des deux phases.

Selon le polluant traité, la réaction peut être suffisamment exothermique pour qu'aucune source de chaleur extérieure ne soit nécessaire.

Le mélange diphasique sortant du réacteur est scindé en deux phases (vapeur et liquide) après passage dans un échangeur de refroidissement. Les deux phases sont ensuite détendues et ramenées à la pression atmosphérique et subissent un traitement final avant rejet.

La plupart des polluants sont oxydés et éliminés à 98-99% et les eaux résiduaires ne contiennent que des traces de composés organiques solubles dans l'eau tel que l'acide acétique.

Les paramètres de fonctionnement principaux sur lesquels on peut agir sont :
- La température : globalement, l'oxydation complète n'est pas possible à moins de 280°C. Pour une température donnée, on atteint rapidement une valeur asymptotique pour la réduction de la DCO (Demande Chimique en Oxygène). Le traitement de composés réfractaires tels que les dérivés halogénés des hydrocarbures aromatiques demande des températures au moins égales à 320°C.
- La pression : celle-ci doit être maintenue suffisamment au-dessus de la pression de saturation de l'eau pour limiter l'entraînement de vapeur d'eau dans les gaz sortant. Cet entraînement permet d'évacuer la chaleur produite par la réaction mais il doit être limité pour assurer le maintien de la température au sein du réacteur et permettre un fonctionnement en régime autothermique.

Une autre fonction de moindre importance est le maintien d'une pression partielle d'oxygène élevée pour faciliter le transfert de celui-ci vers la phase liquide.

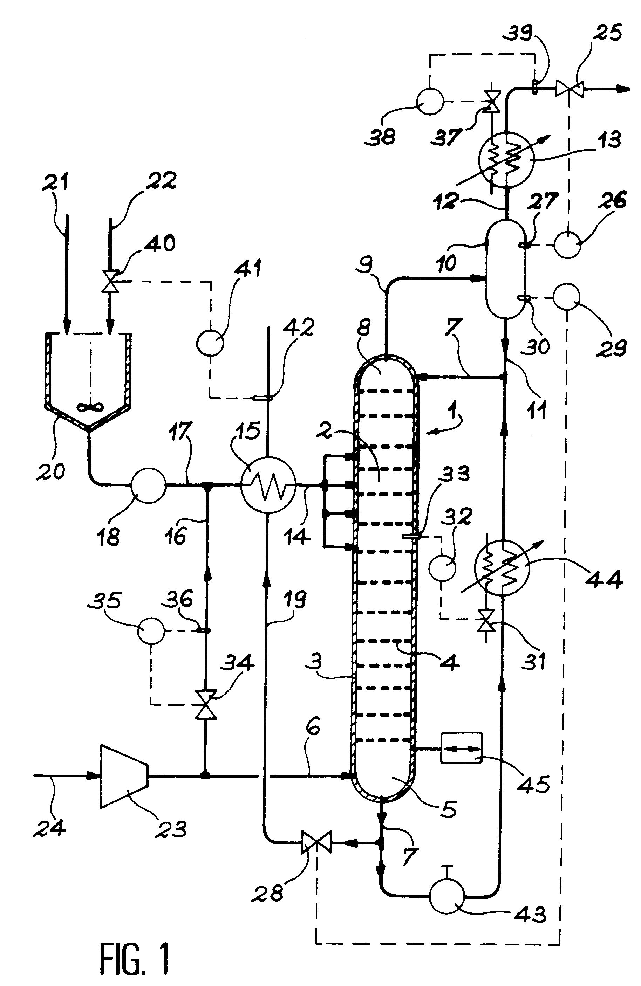

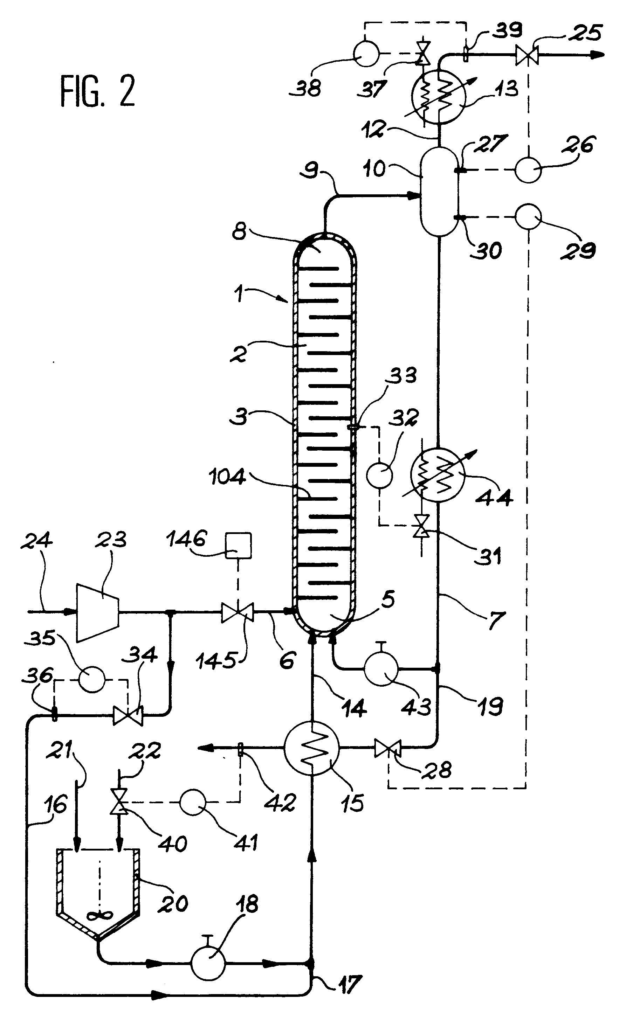

De toute façon, l'invention sera mieux comprise en se référant à la description qui suit de deux exemples de mise en oeuvre qui seront donnés à titre surtout illustratif et non limitatif en se référant aux figures 1 et 2, sur lesquelles :
- la figure 1 est une représentation schématique d'une installation de destruction par incinération d'effluents organiques à l'aide d'une colonne pulsée fonctionnant à contre-courant ;
- la figure 2 est un schéma d'une installation de destruction d'effluents organiques conformes à l'invention utilisant une colonne pulsée à plateaux fonctionnant à co-courant.

Pour simplifier la description, les éléments de l'installation communs aux figures 1 et 2 portent la même référence et les parties de structure différentes mais jouant le même rôle portent les mêmes références précédés du chiffre 1 des centaines.

Sur la figure 1, on a représenté une installation pour l'incinération en continu des déchets toxiques en milieu humidee avec fonctionnement du réacteur à contre-courant.

Cette installation comprend un réacteur (1) prévu pour recevoir un milieu réactionnel (2), sous forme d'un mélange diphasique gaz-liquide. Ce réacteur comporte un corps de réacteur (3) de préférence garni intérieurement de plateaux (4) perforés (ou detout autre type) régulièrement répartis sur toute la hauteur du corps de réacteur (3). Le corps de réacteur (3) comporte à sa partie inférieure une zone de désengagement (5) recevant la conduite d'amenée (6) de l'agent oxydant en phase gazeuse et la conduite (7) de recyclage du milieu réactionnel.

Le réacteur (1) comporte par ailleurs dans sa partie supérieure et surmontant le corps de réacteur (3) une zone de désengagement (8) recevant la conduite (7) de recyclage du milieu réactionnel et la conduite (9) de soutirage du milieu réactionnel.

Un vase d'expansion (10), servant à séparer les produits réactionnels liquide et gazeux, est relié au corps de réacteur (3) par la condudite (9) de soutirage. Le vase d'expansion (10) comporte une conduite (11) d'évacuation du produit réactionnel liquide reliée à la conduite (7) de recyclage et une conduite (12) d'évacuation des produits réactionnels gazeux passant par l'échangeur (13).

L'installation selon l'invention comporte en outre, une conduite (14) d'amenée à chaud et sous pression, dans le corps du réacteur (3), du substrat aqueux chargé de matières organiques à détruire avec l'agent de neutralisation mélangé en ligne dans la conduite d'amenée (17) avec une fraction de l'agent oxydant alimenté par la conduite (16) avant d'être mis en température par l'échangeur (15). Cette conduite (14) débouche dans le corps du réacteur (3) à une hauteur prédéterminée et modifiable au moyen d'un dispositif de distribution. Ce dispositif de distribution permet dans le cas où le substrat aqueux contient des déchets à la fois plus denses et moins denses que le milieu réactionnel (2) de garantir un temps de contact minimal de toute molécule organique présente. L'échangeur (15) assure le refroidissement du produit réactionnel liquide alimenté par la conduite d'amenée (19).

L'installation selon l'invention comporte encore une recette (20) équipée d'un agitateur recevant la conduite d'amenée (21) du substrat aqueux et la conduite (22) d'amenée de l'agent de neutralisation. La conduite d'amenée (17) issue de la recette (20) est équipée d'une pompe (18) servant à contrôler le débit d'alimentation du substrat aqueux.

De même, un compresseur (23) permet le contrôle du débit d'alimentation de l'agent oxydant (24).

Par ailleurs, la conduite (7) de recyclage est équipée d'une pompe (43) contrôlant le débit recyclé et d'un échangeur (44) de maintien en température du milieu réactionnel.

La conduite (7) de recyclage a pour autre fonction la mise en température du réacteur (1) au moyen de l'échangeur (44) et de la pompe (43) pendant la période de démarrage de celui-ci.

L'installation selon l'invention comporte une boucle (25, 27) de régulation de pression équipée d'une vanne de détente (25) maintenant la pression du réacteur à une valeur de consigne prédéterminée, une boucle (28,30) de régulation de niveau dans le vase d'expansion (10) équipée d'une vanne de soutirage (28) placée sur la conduite de soutirage (19) du produit réactionnel liquide, une boucle (31,33) de régulation de température du milieu réactionnel et agissant sur la puissance thermique de l'échangeur (44), une boucle (34,36) de contrôle du taux de partage du débit de l'agent oxydant, une boucle (37,39) de régulation de la température du produit réactionnel gazeux et agissant sur la puissance thermique de l'échangeur (13).

L'installation selon l'invention comporte encore une boucle (40,42) de régulation du pH du milieu réactionnel comportant la conduite d'amenée (22) de l'agent neutralisant basique qui débouche dans la recette 20. L'ouverture et la fermeture de la vanne (40) sont asservis via un dispositif (41) du type comparateur à seuil, à la mesure du pH du produit réactionnel liquide effectué par une sonde (42) placé sur la conduite (19) de soutirage du produit réactionnel liquide.

Selon l'invention, l'installation pour l'incinération en continu des déchets toxiques en milieu humide comporte des moyens d'homogénéisation du milieu réactionnel (2)contenu dans le corps (3) du réacteur (1). Ces moyens comportent en particulier un dispositif d'agitation hydromécanique (45) engendrant des pulsations dans le milieu réactionnel (2) dans la zone de désengagement (6) inférieure.

Sur la figure (2), on a représenté une installation pour l'incinération en continu des déchets toxiques en milieu humide, selon l'invention, avec fonctionnement du réacteur à co-courant.

Cette installation comporte comme précédemment un réacteur (1) comportant un corps de réacteur (3) équipé de plateaux (104), une zone de désengagement inférieure (5), une zone de désengagement supérieure (8) surmontant le corps de réacteur (3), un vase d'expansion (10) avec son échangeur (13).

L'installation comporte aussi un système d'alimentation (14,21,22) régulée du substrat aqueux contenant les effluents organiques, un compresseur (23) qui permet le contrôle du débit d'alimentation de l'agent oxydant (24), une boucle de recyclage (7,43,44), une boucle (25,27) de régulation de pression, une boucle (28,30) de régulation de niveau dans le vase d'expansion, une boucle (31,33) de régulation de température du milieu réactionnel, une boucle (34,36) de contrôle du partage du débit de l'agent oxydant et une boucle (37,39) de régulation du pH du milieu réactionnel.

L'installation pour l'incinération en continu des déchets toxiques en milieu humide de la figure 2 diffère de celle de la figure 1 par l'utilisation de plateaux (104) pleins, logés dans le corps de réacteur (3). Ces plateaux (104) ont un diamètre inférieur à celui du corps du réacteur (3) et sont décalés les uns par rapport aux autres pour réaliser des chicanes tout en permettant le passage des différentes phases contenues dans le corps de réacteur (3).

En outre, l'installation pour l'incinération en continu des déchets toxiques en milieu humide de la figure 2 se distingue de celle de la figure 1 par l'utilisation, comme dispositif pour engendrer des pulsations dans le milieu réactionnel (2), d'un dispositif pneumatique comportant une vanne d'admission (145) de l'agent oxydant dont l'ouverture et la fermeture sont commandés de façon impulsionnelle par un circuit électronique (146) de type connu.

On va maintenant décrire le mode de fonctionnement de l'installation selon l'invention pour l'incinération en continu des déchets toxiques en milieu humide en réacteur à contre-courant, schématisée par la figure 1 ou en réacteur à co-courant schématisée par la figure 2. Les flèches sur ces figures indiquent le sens de circulation des différents courants.

On charge tout d'abord en eau le corps (3) du réacteur (1), et on pressurise l'installation en mettant en marche le compresseur (23) à faible débit et la boucle (25,27) de régulation de pression. Ensuite, la pompe (43) réglée à fort débit et l'échangeur (44) sont mis en service pour porter le milieu réactionnel à la température de fonctionnement régulée par la boucle (31,33) de régulation de température; la boucle (37,39) de régulation de la température des produits gazeux est mise en service.

Le dispositif de pulsation hydromécanique (45) (figure 1) ou pneumatique (145) (figure 2) et la boucle (37,39) de régulation de température des produits gazeux est mis en marche. Il permet d'assurer en combinaison ou avec les plateaux (4) ou (104), un contact intime entre l'agent oxydant introduit dans le réacteur et le milieu réactionnel, et par conséquent un bon transfert de l'agent oxydant vers le milieu réactionnel.

Le dispositif de pulsation hydromécanique (45) (figure 1) ou pneumatique (145) (figure 2) permet d'assurer un bon transfert de chaleur et d'évacuer les produits réactionnels gazeux.

A l'équilibre thermique, on règle le taux de partage du débit d'agent oxydant à l'aide de la boucle (34,36) de contrôle, et on met en service la pompe (18) d'alimentation du substrat aqueux d'abord à faible débit pour éviter le déséquilibre thermique du réacteur. La boucle (28,30) de régulation de niveau dans le vase d'expansion (10) et la boucle (40,42) de régulation de pH sont mises en marche.

On augmente progressivement et proportionnellement l'alimentation en substrat aqueux et l'alimentation en agent oxydant, en s'assurant que l'équilibre thermique est maintenu, jusqu'au régime de fonctionnement prédéterminé.

Les produits de la réaction comportent les gaz résultants de la réaction et ceux n'ayant pas réagi et la solution liquide résiduelle comprenant les éléments minéraux non dégradables et les composés organiques issus de la réaction ou n'ayant pas réagi.

La pulsation de la colonne qui peut être réalisée de façon mécanique, hydraulique, ou pneumatique permet d'homogénéiser parfaitement le milieu réactionnel ainsi que d'augmenter de façon importante le transfert physico-chimique de l'agent oxydant. En outre, l'usage de pulsations permet, par rapport à l'art antérieur, de réduire les consommations énergétiques du poste agitation.

La présence de plateaux permet, associée à celle de la pulsation, d'accroître considérablement par rapport à l'art antérieur, les transferts massiques et thermiques en augmentant en permanence la surface d'échange gaz-milieu réactionnel en contribuant à la rupture et à la coalescence des bulles de gaz contenant l'oxygène et les bulles de gaz issus de la réaction.

La présence de plateaux permet également d'assurer le maintien d'un gradient de concentration dans le milieu réactionnel sur la hauteur de la colonne en limitant les phénomènes de rétro-mélange.

Le vase d'expansion (10), situé à la partie supérieure de la colonne (1), est associé à un système de contrôle de l'entraînement d'eau dans les gaz issus de la réaction et de dissipation de la chaleur réactionnelle.

Dans le cas d'une opération de traitement menée à contre-courant, le dispositif d'alimentation de l'effluent permet de choisir la hauteur d'injection et par la même garantie un temps de séjour de toute molécule organique présente qu'elles soient plus ou moins denses que le milieu réactionnel.

La circulation du milieu réactionnel s'effectue du haut vers le bas du réacteur à contre-courant de l'agent oxydant. Cette configuration permet la mise en contact d'un milieu réactionnel appauvri en substrat avec un agent oxydant riche en oxygène et a l'avantage de réduire au minimum le débit de l'agent oxydant.

Selon un régime de fonctionnement préféré de l'installation qui impose un écoulement des phases de type piston, le dispositif de recyclage permet, quelle que soit la configuration, de contrôler le régime d'écoulement du milieu réactionnel et d'adapter au mieux les conditions de proportionnalité des débits de milieu réactionnel par rapport au débit d'agent oxydant.

Selon un régime préféré de fonctionnement de l'installation qui impose un milieu réactionnel bouillant il est possible de moduler les conditions de pression et de température du milieu réactionnel. Le maintien en régime bouillant a l'avantage d'être temporisateur en particulier en cas de fortes variations de potentialité énergétique du substrat.

On va donner maintenant quelques exemples de destruction de quelques agents polluants dans une installation d'un volume de 10 litres utilisant un débit de substrat aqueux de 10 à 40 L/h, une température de 300°C, une pression jusqu'à 250 bars, une fréquence de pulsation de 30 à 100 cp/min et une amplitude de pulsation de 1 à 5 cm.

L'ensemble des conditions opératoires étudiées et des résultats obtenus est donné dans le tableau ci-après.

Dans ce tableau, la première colonne donne la nature du polluant dans le substrat aqueux, la deuxième colonne donne la demande chimique en oxygène en g/L (DCO) du substrat aqueux, la troisième colonne donne la température de la réaction en °C, la quatrième colonne donne la pression de la réaction en bar, la cinquième colonne donne le temps de séjour du substrat aqueux dans le réacteur en minutes et la sixième colonne donne le taux de réduction de la demande chimique en oxygène obtenu en %.

TABLEAU

| Influent<br>éliminée | DCO<br>(g/L) | T<br>(°C) | P<br>(bar) | t<br>(min) | DCO<br>(%) |
|---|---|---|---|---|---|
| Boues huileuses<br>pétrolières | 103 | 300 | 170 | 30 | 99,0 |
| o-crésol | 24,7 | 300 | 250 | 30 | 99,4 |
| chlorure de<br>méthylène | 3,77 | 300 | 190 | 15 | 98,6 |

## Revendications

1. Procédé de destruction d'effluents organiques toxiques par incinération en phase aqueuse sous pression d'une phase gazeuse contenant de l'oxygène, dans lequel la solution aqueuse contenant les effluents et un agent de neutralisation, ainsi que la phase gazeuse contenant de l'oxygène sont introduites, en continu, dans une colonne à plateaux, caractérisé en ce que la colonne à plateaux est du type pulsé et fonctionne en régime bouillant avec évacuation de la vapeur engendrée au moyen d'un système régulé sur la pression de réaction, la pression étant maintenue entre 150 et 250 bars afin de maintenir l'eau à l'état liquide et de limiter l'entraînement de vapeur d'eau dans les gaz sortant, la température de la colonne étant comprise entre 250°C et 374°C, les sous produits de l'incinération étant soutirés en permanence au sommet de la colonne.

2. Procédé de destruction d'effluents organiques selon la revendication 1, caractérisé en ce que la phase gazeuse contenant de l'oxygène est choisie parmi l'air, l'air enrichi en oxygène et l'oxygène pur.

3. Procédé selon l'une quelconque des revendication 1 et 2, caractérisé en ce que la température de fonctionnement de la colonne est de l'ordre de 300°C.

4. Installation pour l'incinération en continu d'effluents organiques toxiques, caractérisée en ce qu'elle comprend en combinaison :
   - une colonne pulsée à plateaux (1) pour la réaction d'oxydation des effluents ;
   - des moyens d'alimentation (14, 20, 21, 22) de cette colonne (1) en phase aqueuse organique contenant les effluents toxiques et un agent de neutralisation ;
   - des moyens d'alimentation (6, 23, 24) à la base de la colonne (1) en phase gazeuse contenant de l'oxygène ;
   - au sommet de la colonne (1), un vase d'expansion (10) relié à celle-ci par une canalisation de soutirage (9) pour l'extraction en continu, à chaud et sous pression, des produits de la réaction ;
   - des moyens de régulation thermique (15, 31, 32, 33, 44) du mélange réactionnel contenu dans la colonne (1) et (13) pour les produits gazeux de la réaction ;
   - des moyens (25, 26, 27) de régulation de la pression régnant dans le vase d'expansion (10) et dans la colonne (1).

5. Installation pour l'incinération en continu d'effluents organiques toxiques selon la revendication 4, caractérisée en ce que, la colonne (1) fonctionnant à contre courant, le mélange réactionnel circule de haut en bas dans la colonne (1), la solution aqueuse organique contenant les effluents à détruire étant introduite, dans la partie supérieure de la colonne (1), par un dispositif d'introduction (14) à niveau réglable en hauteur.

6. Installation pour l'incinération en continu d'effluents organiques toxiques selon la revendication 4, caractérisée en ce que, la colonne (1) fonctionnant à co-courant, le mélange réactionnel circule de bas en haut dans la colonne (1), la phase aqueuse organique contenant les effluents à détruire et la phase gazeuse contenant de l'oxygène étant toutes deux introduites à la base de la colonne (1).

7. Installation selon la revendication 4, caractérisée en ce que le vase d'expansion (10) de la colonne (1) est équipé d'un condenseur déshumidificateur (13) servant à la récupération du milieu réactionnel vaporisé au cours de la réaction et au maintien du niveau dans la colonne (1).

8. Installation selon la revendication 5, caractérisée en ce que le dispositif d'alimentation (14) du substrat aqueux permet son admission dans le corps (3) de réacteur à une hauteur choisie selon la qualité du substrat aqueux afin de garantir un temps de séjour minimum de toute molécule organique présente.

9. Installation selon l'une quelconque des revendication 4 à 6, caractérisée en ce qu'elle comporte des moyens d'homogénéisation (43) de mise en circulation et de recyclage de la première phase après son traitement (2) dans la colonne (1).

10. Installation selon l'une quelconque des revendication 1 à 9, caractérisée en ce qu'elle comporte en outre des moyens (40, 42) pour réguler le pH dans la colonne (1).


**Patentansprüche**

1. Verfahren zur Vernichtung von toxischen organischen Abwässern durch Verbrennung in wäßriger Phase unter dem Druck einer Sauerstoff enthaltenden Gasphase, bei dem die wäßrige Lösung, die die Abwässer und ein Neutralisationsmittel enthält, sowie die Sauerstoff enthaltende Gasphase kontinuierlich in eine Bodenkolonne eingeleitet werden,
dadurch gekennzeichnet, daß die Bodenkolonne vom gepulsten Typ ist und im Siedebetrieb mit Abfuhren des erzeugten Dampfes mittels eines über den Reaktionsdruck regulierten Systems arbeitet, wobei der Druck zwischen 150 und 250 bar gehalten wird, um das Wasser im flüssigen Zustand zu halten und um die Mitführung von Wasserdampf in den austretenden Gasen zu begrenzen, wobei die Temperatur der Kolonne zwischen 250°C und 374°C liegt und wobei die Nebenprodukte der Verbrennung dauernd am Kopf der Kolonne abgezogen werden.

2. Verfahren zur Vernichtung von organischen Abwässern nach Anspruch 1, dadurch gekennzeichnet, daß die Sauerstoff enthaltende Gasphase ausgewählt wird unter Luft, mit Sauerstoff angereicherter Luft und reinem Sauerstoff.

3. Verfahren nach einem der Ansprüche 1 und 2, dadurch gekennzeichnet, daß die Arbeitstemperatur der Kolonne von der Größenordnung 300°C ist.

4. Anlage zur kontinuierlichen Verbrennung von toxischen organischen Abwässern, dadurch gekennzeichnet, daß sie in Kombination
   - eine gepulste Bodenkolonne (1) fur die Reaktion der Oxydation der Abwässer,
   - Einrichtungen zur Versorgung (14, 20, 21, 22) dieser Kolonne (1) mit wäßriger organischer Phase, die die toxischen Abwässer und ein Neutralisationsmittel enthält,
   - Einrichtungen (6, 23, 24) am Fuß der Kolonne (1) zur Versorgung mit Sauerstoff enthaltender Gasphase,
   - am Kopf der Kolonne (1) ein Ausdehnungsgefäß (10), das mit dieser durch eine Ableitung (9) zum kontinuierlichen Entfernen der Reaktionsprodukte in der Wärme und unter Druck verbunden ist,
   - Einrichtungen zur thermischen Regulierung (15, 31, 32, 33, 44) der Reaktionsmischung, die in der Kolonne (1) und (13) für die gasförmigen Produkte der Reaktion enthalten ist, sowie
   - Einrichtungen (25, 26, 27) zur Regulierung des im Ausdehnungsgefäß (10) und in der Kolonne (1) herrschenden Druckes umfaßt.

5. Anlage zur kontinuierlichen Verbrennung von toxischen organischen Abwässern nach Anspruch 4, dadurch gekennzeichnet, daß, wenn die Kolonne (1) im Gegenstrom arbeitet, die Reaktionsmischung von oben nach unten in der Kolonne (1) strömt, wobei die wäßrige organische Lösung, die die zu vernichtenden Abwasser enthalt, im oberen Teil der Kolonne (1) durch eine Einleitungsvorrichtung (14) mit in der Höhe verstellbarem Niveau eingeleitet wird.

6. Anlage zur kontinuierlichen Verbrennung von toxischen organischen Abwässern nach Anspruch 4, dadurch gekennzeichnet, daß, wenn die Kolonne (1) im Mitstrom arbeitet, die Reaktionsmischung von unten nach oben in der Kolonne (1) strömt, wobei die wäßrige organische Lösung, die die zu vernichtenden Abwässer enthält, und die Sauerstoff enthaltende Gasphase beide am Fuß der Kolonne (1) eingeleitet werden.

7. Anlage nach Anspruch 4, dadurch gekennzeichnet, daß das Ausdehnungsgefäß (10) der Kolonne (1) mit einem Feuchtigkeit abscheidenden Kühler (13) versehen ist, der zur Wiedergewinnung des im Verlauf der Reaktion verdampften Reaktionsmediums und zur Aufrechterhaltung des Niveaus in der Kolonne (1) dient.

8. Anlage nach Anspruch 5, dadurch gekennzeichnet, daß die Vorrichtung zur Zufuhr (14) des wäßrigen Substrats seine Einleitung in den Reaktorkörper (3) auf einer Höhe gestattet, die entsprechend der Beschaffenheit des wäßrigen Substrats gewählt ist, um die Mindest-Aufenthaltsdauer aller vorhandenen organischen Moleküle sicherzustellen.

9. Anlage nach einem der Ansprüche 4 bis 6, dadurch gekennzeichnet, daB sie Einrichtungen zur Homogenisation (43), zur Umwälzung und zur Wiedergewinnung der ersten Phase nach deren Behandlung (2) in der Kolonne (1) enthält.

10. Anlage nach einem der Ansprüche 1 bis 9, dadurch gekennzeichnet, daß sie ferner Einrichtungen (40, 42) umfaßt, um den pH in der Kolonne (1) zu regulieren.

## Claims

1. Process for destruction of toxic organic effluents by incineration in aqueous phase under pressure of a gas phase containing oxygen, in which the aqueous solution containing the effluents and a neutralizing agent, together with the gas phase containing oxygen, are introduced continuously into a plate column, characterized in that the plate column is of the pulsed type and operates in a boiling regime with removal of the vapour generated by means of a system controlled by the reaction pressure, the pressure being maintained between 150 and 250 bars in order to keep the water in the liquid state and to limit the entrainment of steam in the leaving gases, the temperature of the column being between 250°C and 374°C, the byproducts of the incineration being drawn off continuously at the top of the column.

2. Process for destruction of organic effluents according to Claim 1, characterized in that the gas phase containing oxygen is chosen from air, oxygen-enriched air and pure oxygen.

3. Process according to either of Claims 1 and 2, characterized in that the operating temperature of the column is of the order of 300°C.

4. Plant for the continuous incineration of toxic organic effluents, characterized in that it comprises in combination:
   - a pulsed plate column (1) for the effluent oxidation reaction;
   - means (14, 20, 21, 22) for feeding this column (1) with organic aqueous phase containing the toxic effluents and a neutralizing agent;
   - means (6, 23, 24) for feeding, at the base of the column (1), a gas phase containing oxygen;
   - at the top of the column (1) an expansion vessel (10) connected to the latter by a discharge conduit (9) for continuous extraction, hot and under pressure, of the reaction products;
   - means (15, 31, 32, 33, 44) for temperature control of the reaction mixture present in the column (1) and (13) for the gaseous products of the reaction;
   - means (25, 26, 27) for controlling the pressure prevailing in the expansion vessel (10) and in the column (1).

5. Plant for the continuous incineration of toxic organic effluents according to Claim 4, characterized in that, with the column (1) operating countercurrentwise, the reaction mixture travels from the top downwards in the column (1), the organic aqueous solution containing the effluents to be destroyed being introduced into the upper part of the column (1) by an entry device (14) at a level which is adjustable in height.

6. Plant for the continuous incineration of toxic organic effluents according to Claim 4, characterized in that, with the column (1) operating countercurrentwise, the reaction mixture travels from the bottom upwards in the column (1), the organic aqueous phase containing the effluents to be destroyed and the gas phase containing oxygen being both introduced at the base of the column (1).

7. Plant according to Claim 4, characterized in that the expansion vessel (10) of the column (1) is equipped with a dehumidifying condenser (13) used for the recovery of the reaction medium vaporized during the reaction and to maintain the level in the column (1).

8. Plant according to Claim 5, characterized in that the device (14) for feeding the aqueous substance allows it to enter the body (3) of the reactor at a height chosen according to the quality of the aqueous substrate in order to guarantee a minimum residence time of any organic molecule that is present.

9. Plant according to any one of Claims 4 to 6, characterized in that it comprises means for homogenizing (43) for circulating and for recycling the first phase after its treatment (2) in the column (1).

10. Plant according to any one of Claims 1 to 9, characterized in that it additionally comprises means (40, 42) for controlling the pH in the column (1).

FIG. 1

FIG. 2